(19) Europäisches Patentamt
European Patent Office
Office européen des brevets

(11) **EP 2 805 138 B1**

(12) **EUROPÄISCHE PATENTSCHRIFT**

(45) Veröffentlichungstag und Bekanntmachung des Hinweises auf die Patenterteilung:
**24.10.2018   Patentblatt 2018/43**

(21) Anmeldenummer: **13704343.6**

(22) Anmeldetag: **15.01.2013**

(51) Int Cl.:
*G01K 7/36* (2006.01)     *H05B 6/06* (2006.01)
*H05B 6/14* (2006.01)     *H05B 6/10* (2006.01)
*B29C 65/36* (2006.01)

(86) Internationale Anmeldenummer:
**PCT/AT2013/050010**

(87) Internationale Veröffentlichungsnummer:
**WO 2013/106877 (25.07.2013 Gazette 2013/30)**

(54) **SCHALTUNG ZUM INDUKTIVEN ERWÄRMEN EINES METALLES**

CIRCUIT FOR THE INDUCTIVE HEATING OF A METAL

CIRCUIT DE CHAUFFAGE INDUCTIF D'UN MÉTAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2012   AT 500062012**

(43) Veröffentlichungstag der Anmeldung:
**26.11.2014   Patentblatt 2014/48**

(73) Patentinhaber: **KE KELIT Kunststoffwerk Gesellschaft m.b.H.**
**4020 Linz (AT)**

(72) Erfinder:
• **HALADA, Lucian**
  **A-4040 Linz (AT)**
• **WURMITZER, Maximilian**
  **A-8854 Krakaudorf (AT)**

(74) Vertreter: **Patentanwaltskanzlei Hübscher**
**Spittelwiese 4**
**4020 Linz (AT)**

(56) Entgegenhaltungen:
**GB-A- 2 091 428          US-A- 5 125 690**
**US-A- 5 573 613          US-A1- 2008 121 633**
**US-A1- 2011 120 989**

**Beschreibung**

**[0001]** Die Erfindung bezieht sich auf ein Verfahren zum Schmelzverbinden schweißbarer Thermoplastkörper, mit einem in ein nichtmagnetisches Bett eingebetteten Metall, wobei zum induktiven Erwärmen des Metalles ein Übertrager vorgesehen ist, der im Metall in Abhängigkeit eines Erregerstromes und einer Erregerspannung Wirbelströme induziert und der zusammen mit dem zu erwärmenden Metall eine Lastimpedanz bildet, wobei die Temperatur des zu erwärmenden Metalles überwacht wird.

**[0002]** Derartige in Schweißvorrichtungen integrierte Schaltungen werden beispielsweise zum Verbinden einzelner Schüsse einer Kunststoffleitung verwendet. Dazu werden Rohre oder Mantelrohre aus einem thermoplastischen Kunststoff miteinander über eine thermoplastische Verbindungsmuffe verbunden. Zu diesem Zweck ist es bekannt (WO 2007/128384 A2), zwischen der Muffe und den zu verbindenden Rohren aus thermoplastischem Kunststoff je einen in sich geschlossenen Ring aus einem Lochblech einzulegen, um dann mit Hilfe einer die Muffe im Bereich des Lochblechrings umschließenden Induktionsspule im Lochblechring Wirbelströme zu induzieren, über die der Blechring mit der Folge erwärmt wird, dass der thermoplastische Kunststoff der Muffe und der zu verbindenden Mantelrohre im Verbindungsbereich aufgeschmolzen wird, sodass sich durch das Lochblech hindurch eine innige Schweißverbindung zwischen der Muffe und den Mantelrohren einstellt. Weitere Vorrichtungen und Verfahren zum Induktionsverschweißen von Plastikrohren sind aus der GB 2 091 428 A und der US 5 125 690 A bekannt. Die US 5 573 613 A offenbart eine weitere Vorrichtung zum Induktionsschweißen. Vorrichtungen und Verfahren zum Ansteuern von Induktionskochfeldern offenbaren die US 2011/0120989 A und die US 2008/0121633 A, wobei es insbesondere bekannt ist, die Vorrichtungen im Bereich ihrer Resonanzfrequenz zu betreiben.

**[0003]** Eine derartige Vorrichtung ist zudem in der A 2058/2010 beschrieben. Einer der wesentlichen Vorteile eines damit möglichen Schweißverfahrens liegt darin, dass für die Zuleitung der erforderlichen Schweißenergie zur Anschlussmuffe keine Anschlussdrähte erforderlich sind. Dadurch gibt es keine, wie bei Heizwendelwiderstandsschweißverfahren im Durchtrittsbereich der Anschlussdrähte entstehenden Störzonen am Übergang zwischen geschweißtem und ungeschweißtem Material. Wie bei allen Verfahren ist es jedoch erstrebenswert, den Schweißprozess temperaturmäßig zu überwachen, gegebenenfalls auch regeln zu können. Dies kann bislang nur mit einem im Schweißbereich vorgesehenen Temperatursensor bewerkstelligt werden, was aber aus montagetechnischen Gründen unpraktikabel ist

**[0004]** Der Erfindung liegt somit die Aufgabe zugrunde, ein Verfahren und ein, eine nach diesem Verfahren betriebene Schaltung aufweisendes, Induktionsschweißgerätzum induktiven Erwärmen eines gegebenenfalls in ein nichtmagnetisches Bett eingebetteten Metalles, insbesondere zum induktiven Verschweißen einer Muffe mit dem Mantelrohr einer Fernwärmeleitung, so auszugestalten, dass eine Bestimmung des Temperaturverlaufes im Schweißbereich möglich wird, ohne das sichere Verschweißen zu gefährden. Insbesondere sollen nach einer Weiterbildung der Erfindung eine Überwachung eines vollständigen Aufschmelzens des Schweißbereiches und eine Protokollierung der Schweißnaht möglich sein.

**[0005]** Die Erfindung löst die gestellte Aufgabe dadurch, dass die Lastimpedanz im Bereich ihrer Resonanzfrequenz betrieben wird, dass der Erregerstrom und die Erregerspannung sowie deren Phasenverschiebung zueinander beim Erwärmen des Metalles gemessen und mitprotokolliert werden und dass ein der Phasenverschiebung proportionaler Temperaturverlauf aus Erregerstrom, Erregerspannung und Phasenverschiebung errechnet wird. Vorteilhafte Weiterbildungen der Erfindung sind in den Unteransprüchen dargestellt.

**[0006]** In der Zeichnung ist die Erfindung an einem Ausführungsbeispiel schematisch dargestellt. Es zeigen

Fig. 1 ein vereinfachte Schaltbild eines erfindungsgemäßen Verfahrens

Fig. 2 ein die Enthalpie über der Zeit während des Schweißprozesses einer Kunststoffmuffe darstellendes Diagramm und

Fig. 3 ein den Temperaturverlauf im Schweißbereich einer Kunststoffmuffe über der Zeit darstellendes Diagramm.

**[0007]** Um die Systemschwächen- die mit der Zu- oder Einleitung von elektrisch leitenden Kabeln oder Drähten sowohl für die Schweißung als auch für die Temperaturüberwachung in die Schweißzone verbunden sind gänzlich zu vermeiden, ist erfindungsgemäß eine berührungslose indirekte Temperaturmessung vorgesehen.

**[0008]** Dazu ist es notwendig, aus Parametern die über eine Primärspule beim Induktionsschweißen in den Schweißgenerator übertragen und dort ausgewertet werden, die Temperatur in der Sekundärspule, also dem geschlossenen Heizmetall, beispielsweise ein Heizmetallband, bestimmen zu können. Die Lösung dieser messtechnischen Aufgabe wird nachfolgend beschrieben.

**[0009]** Im gegenständlichen Anwendungsfall erfolgt die Energieübertragung induktiv von einer primären Luftspule auf die Sekundärseite, das zu erwärmende Metall, ein Metallband. Die Temperatur des Metallbandes muss aus verfahrens- und Prüftechnischen Gründen ohne direkte Messung erfasst werden.

**[0010]** Das Metallband hat je nach verwendetem Material einen mehr oder weniger hohen positiven oder negativen Temperaturkoeffizient, besteht also aus Materialien, die den Strom bei tieferen Temperaturen besser leiten als bei höheren. Ihr elektrischer Widerstand ver-

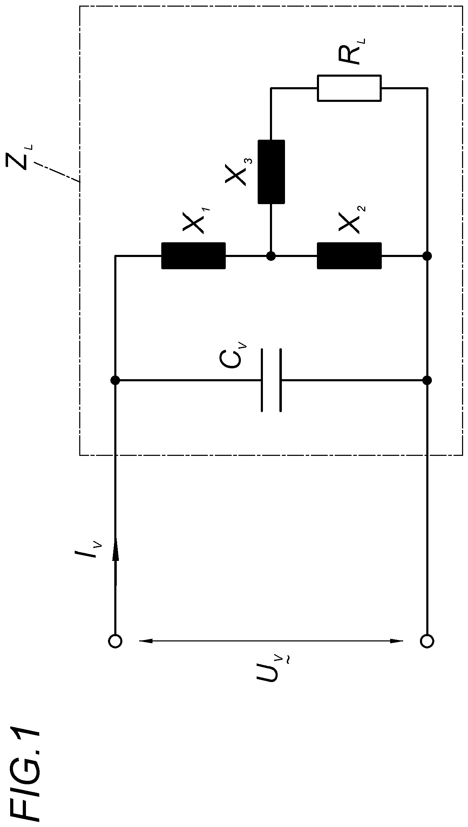

größert sich also bei steigender Temperatur. Diese Tatsache wird benutzt um den Temperaturverlauf während des Schweißprozesses zu erfassen. Wie aus der Skizze des Prinzipschaltbildes (Fig. 1) ersichtlich, wird der überwiegend induktive Lastkreis mit einer Parallelkapazität kompensiert. In Fig. 1 ist C1 eine Parallelkapazität, X1 eine Streuinduktivität, X2 eine Induktivität für die Magnetisierung, X3 eine Sekundärinduktivität (umgerechnet auf die Primärseite) und RL der temperaturabhängige Metallwiderstand, also im Beispiel der Bandwiderstand. Diese Wiederstände zusammen bilden die an einer Versorgung liegenden Lastimpedanz XL, an welcher der Erregerstrom und die Erregerspannung anliegen.

Im dargestellten Modell bewirkt eine Widerstandsänderung $\Delta R_L$ des Bandwiderstandes eine Änderung des Gesamtwiderstandes $Z_L$ der Gesamtschaltung. Dies bewirkt unabhängig von sonstigen Einflüssen wie Leistungs-, Spannungs-, sowie Stromänderungen eine Phasenverschiebung in der Energieversorgung, zwischen Versorgungsspannung $U_V$ und Versorgungsstrom $I_V$. Wird die Schaltung im Bereich der Resonanzfrequenz betrieben, führt dies zu sehr brauchbaren Ergebnissen. Im Besonderen ist $\Delta R_L$ ist proportional zu $\Delta Z_L$ und $\Delta Z_L$ ist äquivalent zu $\Delta\varphi$, also ist $\Delta R_L$ äquivalent zu $\Delta\varphi$. Durch Messung Versorgungsspannung $U_V$ und Versorgungsstrom $I_V$ über der Zeit, insbesondere in Echtzeit, können somit Phasenverschiebung $\Delta\varphi$ in der Energieversorgung und in weiterer Folge der Widerstand $R_L$ des Metalles mit Hilfe des mathematischen Modelles errechnet werden. Somit lässt sich der Widerstandsverlauf während des Schweißprozesses mitprotokollieren. Dieser Widerstandsverlauf ist wegen der Kaltleitereigenschaften des Metalles, also wegen der Temperaturabhängigkeit, proportional dem Temperaturverlauf während des Schweißprozesses.

$$R_L = R_0 * e^{b(T_L - T_0)}$$

Mit $R_0$ als Nennwiderstand bei beispielsweise Raumtemperatur $T_0$, mit b als Materialkonstante und mit $T_L$ der zu bestimmenden, dem jeweiligen errechneten Widerstand $R_L$ zugeordneten und zu messenden Temperatur.

Eine Eichung der Schaltung kann beispielsweise damit durchgeführt werden, dass die Eingangsfrequenz F der Spannungsversorgung um $\Delta F$ verändert wird. Dies bewirkt auf Basis der Modellrechnung eine Änderung der Lastimpedanz $X_L$, in Folge eine definierte Bandwiderstandsänderung $\Delta R_L$ und einen definierten Messwert von $\Delta\varphi$.

Mit der Erfindung kann ein Rechenwert ermittelt werden, der proportional zur Heizbandtemperatur ist und anhand dessen Verlauf die relative Änderung des Temperaturwertes im Schweißbereich sehr gut abbildet werden kann.

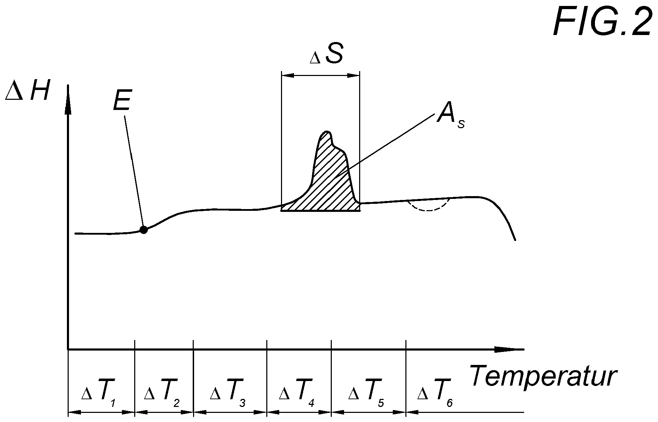

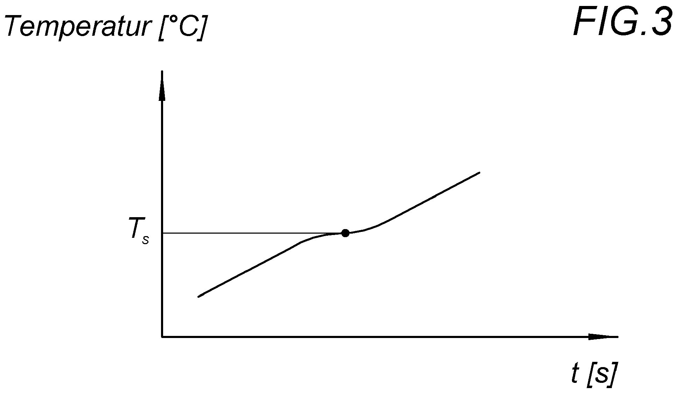

Eine verbesserte und genauere Zuordnung zu einer physikalischen Messgröße (°C, °K) ist mit der in weiterer Folge beschriebenen Schaltung möglich. Fig. 2 und 3 zeigen schematisch das Aufschmelzverhalten eines teilkristallinen Polymers (z.B Polyethylen). Mit steigernder Temperatur (T) nimmt der Enthalpiegehalt H (Energiemenge je Gramm) des Stoffes zu. Polymere haben aufgrund ihrer molekularen Struktur keinen definierten Schmelzpunkt sondern einen Schmelzbereich, der als Fläche unterhalb der Kurve des schraffierten Bereichs angenommen werden kann.

Mit dieser Stoffeigenschaft wird im Aufschmelzprozess bei Thermoplasten bei gleicher Leistungszufuhr, vor und nach dem Aggregatzustandswechsel ein einigermaßen konstanter Temperaturanstieg erfolgen (Fig. 3). Im Bereich der kristallinen Aufschmelzung (bei PE, 142°C) wird bei gleichbleibender Energiezufuhr, eine Temperaturzunahme in der Schweißlinse erst dann wieder erfolgen wird, wenn das Material um das Heizmetall überwiegend in den plastifizierten Zustand übergegangen ist. Diese Verzögerung in der Temperaturzunahme an diesem Temperaturpunkt ist in Fig. 3 dargestellt.

Dieser Umstand wird erfindungsgemäß dahingehend genutzt, dass im Betrieb stets der Widerstand des als Kaltleiter ausgebildeten Metalles errechnet und mitprotokolliert wird, wobei der Widerstand bei Erreichen der Aufschmelztemperatur des Bettes bis zum Aufschmelzen des Bettes zumindest nahezu konstant bleibt und erst nach einem Aufschmelzen wieder ansteigt, und dass der aus dem Widerstandsverlauf errechnete Temperaturverlauf mit der dem Bettmaterial zueigenen Schmelztemperatur abgeglichen wird, bevor der Temperaturverlauf in einen Speicher abgelegt wird.

Mit Hilfe entsprechender Softwareunterstützung werden die bei jedem Schweißvorgang die erfassten Messdaten nach Durchschreiten dieses Temperaturpunktes an die kristalline Schmelzpunkttemperatur "angeheftet" - und so der Temperaturverlauf echten Messwerten zuordenbar. Sämtliche Werte davor und danach können somit einer exakten, auf wenige Grad Celsius genauen, Schweißbandtemperatur zugeordnet und die Logdateien in Form entsprechender Temperaturkurven ausgewiesen werden, wenn ein Abgleich zwischen dem aus dem Widerstandsverlauf errechnete Temperaturverlauf mit der dem Bettmaterial zueigenen Schmelztemperatur erfolgt. Dazu wird die Kurve des errechneten Temperaturverlaufes im errechneten Schmelzbereich beispielsweise um die materialcharakteristische Schmelztemperatur in Richtung der Temperaturachse verschoben.

Des Weiteren betrifft die Erfindung ein nicht näher dargestelltes Induktionsschweißgerät, insbesondere für Induktionsverbindungsmuffen zum Schmelzverbinden schweißbarer Thermoplastkörper, mit einer Schaltung nach dem vorbeschriebenen Verfahren.

**Patentansprüche**

1. Verfahren zum Schmelzverbinden schweißbarer Thermoplastkörper, mit einem in ein nichtmagnetisches Bett eingebetteten Metall, wobei zum induktiven Erwärmen des Metalles ein Übertrager vorgesehen ist, der im Metall in Abhängigkeit eines Erregerstromes und einer Erregerspannung Wirbelströme induziert und der zusammen mit dem zu erwärmenden Metall eine Lastimpedanz bildet, wobei die Temperatur des zu erwärmenden Metalles überwacht wird, **dadurch gekennzeichnet, dass** die Lastimpedanz im Bereich ihrer Resonanzfrequenz betrieben wird, dass der Erregerstrom und die Erregerspannung sowie deren Phasenverschiebung zueinander beim Erwärmen des Metalles gemessen und mitprotokolliert werden und dass ein der Phasenverschiebung proportionaler Temperaturverlauf aus Erregerstrom, Erregerspannung und Phasenverschiebung errechnet wird.

2. Verfahren nach Anspruch 1, **dadurch gekennzeichnet, dass** die Erregerfrequenz der an der Lastimpedanz anliegenden Erregerspannung zur Eichung um verändert wird, was eine Phasenverschiebung und eine Lastimpedanzänderung bewirkt, die vorzugsweise mitprotokolliert wird, wobei aus dem zugeordneten Erregerstrom, der zugeordneten Erregerspannung und der zugeordneten Phasenverschiebung aus einem mathematischen Modell der Lastimpedanz die Widerstandsänderung des als Kaltleiter oder Heißleiter ausgebildeten Metalles errechnet wird.

3. Verfahren nach Anspruch 1 oder 2, **dadurch gekennzeichnet, dass** im Betrieb stets der Widerstand des als Kaltleiter oder Heißleiter ausgebildeten Metalles errechnet und mitprotokolliert wird, wobei der Widerstand ($R_L$) bei Erreichen einer Aggregatszustandänderung, insbesondere bei Erreichen der Aufschmelztemperatur des Bettes bis zum Aufschmelzen des Bettes, zumindest nahezu konstant bleibt und erst nach einem Aufschmelzen wieder ansteigt, und dass der aus dem Widerstandsverlauf errechnete Temperaturverlauf mit der dem Bettmaterial zueigenen Schmelztemperatur abgeglichen wird, bevor der Temperaturverlauf in einen Speicher abgelegt wird.

4. Verfahren nach einem der Ansprüche 1 bis 3, **dadurch gekennzeichnet, dass** das Metall in ein, insbesondere eine Verbindungsmuffe bildendes, Kunststoffbett eingebettet ist.

5. Induktionsschweißgerät, insbesondere für Induktionsverbindungsmuffen zum Schmelzverbinden schweißbarer Themoplastkörper, mit einer nach einem Verfahren der Ansprüche 1 bis 4 betriebenen Schaltung.

**Claims**

1. Method for the fusion jointing of weldable thermoplastic bodies, having a metal embedded in a nonmagnetic bed, wherein a transformer is provided for induction heating of the metal and induces eddy currents in the metal as a function of an exciter current and an exciter voltage and, together with the metal to be heated, forms a load impedance, wherein the temperature of the metal to be heated is monitored, **characterised in that** the load impedance is operated in the region of the resonant frequency thereof, that the exciter current and exciter voltage and their phase shift relative to each other are measured and simultaneously logged when the metal is being heated, and that a temperature progression proportional to the phase shift is calculated from the exciter current, exciter voltage and phase shift.

2. Method as claimed in claim 1, **characterised in that** the exciter frequency of the exciter voltage applied to the load impedance is changed for calibration, which causes a phase shift and a change in load impedance, which is preferably simultaneously logged, wherein the change in resistance of the metal formed as a PTC thermistor or NTC thermistor is calculated from the associated exciter current, the associated exciter voltage and the associated phase shift from a mathematical model of the load impedance.

3. Method as claimed in claim 1 or 2, **characterised in that**, in operation, the resistance of the metal formed as a PTC thermistor or NTC thermistor is always calculated and simultaneously logged, wherein the resistance ($R_L$) remains at least virtually constant upon reaching a change in aggregate state, in particular upon reaching the fusion temperature of the bed up to the fusion of the bed, and only rises after a fusion process, and that the temperature progression calculated from the resistance progression is aligned with the fusion temperature specific to the bed material, before the temperature progression is stored in a memory.

4. Method as claimed in any one of claims 1 to 3, **characterised in that** the metal is embedded in a synthetic material bed, in particular one forming a connecting sleeve.

5. Induction welding device, in particular for induction connection sleeves for fusion jointing of weldable thermoplastic bodies, comprising a circuit operated according to a method of claims 1 to 4.

## Revendications

1. Procédé pour la liaison par fusion de corps thermoplastiques soudables, avec un métal incorporé dans un lit non magnétique, un transducteur étant prévu pour le chauffage inductif du métal, qui induit des courants de Foucault dans le métal en fonction d'un courant d'excitation et d'une tension d'excitation et forme avec le métal à chauffer une impédance de charge, la température du métal à chauffer étant surveillée, **caractérisé en ce que** l'impédance de charge est exploitée dans le domaine de sa fréquence de résonance, **en ce que** le courant d'excitation et la tension d'excitation ainsi que leur déphasage sont mesurés ensemble lors du chauffage du métal et enregistrés simultanément, et **en ce qu'**une courbe de température proportionnelle au déphasage est obtenue partir du courant d'excitation, de la tension d'excitation et du déphasage.

2. Procédé selon la revendication 1, **caractérisé en ce que** la fréquence d'excitation de la tension d'excitation présente au niveau de l'impédance de charge pour étalonnage est modifiée, ce qui génère un déphasage et une modification de l'impédance de charge, qui est/sont de préférence enregistré(s) simultanément, le changement de résistance du métal réalisé en tant que conducteur froid ou conducteur chauffant étant obtenu à partir du courant d'excitation associé, de la tension d'excitation associée et du déphasage associé, à partir d'un modèle mathématique de l'impédance de charge.

3. Procédé selon la revendication 1 ou 2, **caractérisé en ce que** continuellement, en fonctionnement, la résistance du métal réalisé en tant que conducteur froid ou conducteur chauffant est obtenue et enregistrée simultanément, la résistance ($R_L$), une fois la modification de l'état de l'ensemble atteinte, en particulier lorsque la température de fusion du lit jusqu'à la fusion est atteinte jusqu'à la fusion du lit, demeure au moins à peu près constante et augmente à nouveau uniquement après une fusion, et **en ce que** la courbe de température réalisée à partir de la caractéristique résistance est alignée avec la température de fusion adaptée au matériau du lit, avant sauvegarde de la courbe de température.

4. Procédé selon l'une des revendications 1 à 3, **caractérisé en ce que** le métal est incorporé dans un lit de matière plastique formant en particulier un manchon de raccordement.

5. Appareil pour le soudage par induction, en particulier pour des manchons de raccordement par induction, pour la liaison par fusion de corps thermoplastiques soudables, avec un circuit fonctionnant selon un procédé des revendications 1 à 4.

FIG.1

EP 2 805 138 B1

FIG.2

EP 2 805 138 B1

FIG.3

Temperatur [°C]

$T_s$

t [s]

**EP 2 805 138 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007128384 A2
- GB 2091428 A
- US 5125690 A
- US 5573613 A
- US 20110120989 A
- US 20080121633 A